(19) Europäisches Patentamt
European Patent Office
Office européen des brevets

(11) Veröffentlichungsnummer : **0 132 228**
**B1**

(12) # EUROPÄISCHE PATENTSCHRIFT

(45) Veröffentlichungstag der Patentschrift : **02.03.88**

(21) Anmeldenummer : **84810337.0**

(22) Anmeldetag : **09.07.84**

(51) Int. Cl.⁴ : **C 08 L 67/02**, C 08 K 3/34, C 08 K 5/09, C 08 K 9/04

(54) **Flammwidrige verstärkte Formmasse auf der Basis thermoplastischer Polyester und deren Verwendung.**

(30) Priorität : **13.07.83 CH 3842/83**

(43) Veröffentlichungstag der Anmeldung : **23.01.85 Patentblatt 85/04**

(45) Bekanntmachung des Hinweises auf die Patenterteilung : **02.03.88 Patentblatt 88/09**

(84) Benannte Vertragsstaaten : **CH DE FR GB IT LI**

(56) Entgegenhaltungen :
**EP-A- 0 048 483**
**DE-A- 2 408 531**
**DE-A- 2 855 005**
**FR-A- 2 322 900**
**GB-A- 2 075 532**
**US-A- 4 368 283**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Breitenfellner, Franz, Dr.**
**Konrad-Adenauer-Strasse 56**
**D-6140 Bensheim 1 (DE)**
Erfinder : **Kainmüller, Thomas, Dr.**
**Am Kümmelberg 1**
**D-6145 Lindenfels/Odenwald (DE)**

**EP 0 132 228 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft verstärkte flammwidrig ausgerüstete thermoplastische Polyesterformmassen sowie deren Verwendung zur Herstellung geformter Gegenstände.

Flammwidrig ausgerüstete thermoplastische Polyester, die zusätzlich verstärkt sind, werden vorwiegend im Bereich der Elektrotechnik und der Elektronik eingesetzt. Solche Polyesterformmassen neigen stark zur Bildung von geschmolzenen und gegebenenfalls brennenden Tropfen beim Brennvorgang, erfüllen damit vielfach nicht die an solche Werkstoffe gestellten Sicherheitsbestimmungen, und können deshalb nur in beschränktem Umfang eingesetzt werden.

Es ist bekannt, dass zur Unterdrückung des Abtropfens der sich unter Einwirkung einer offenen Flamme bildenden Schmelze von verstärkten, flammwidrigen Formmassen z. B. bestimmte Geliermittel, wie feinteilige Silikate (DE-AS 24 08 531, FR-PS 2 322 900), Kieselsäurederivate (DE-OS 22 26 931) oder Füllstoffe mit einem Länge/Durchmesserverhältnis von mehr als 50 (DE-AS 21 58 432) verwendet werden können. Beispiele für solche Zusätze sind Kaolin, Talkum, gegebenenfalls organisch modifizierte Bentonite und Montmorillonite, Glaskugeln, oberflächenaktive Kieselsäure, oligomeres Natriumsilikat, Asbest, Graphit- oder Glasfasern, Siliciumcarbid, Diatomeenerde usw. Diese Antitropfmittel sind insofern nachteilig, als sie eine beträchtliche Reduktion der Zähigkeitseigenschaften der resultierenden flammwidrig ausgerüsteten verstärkten Formmassen verursachen, wodurch deren Gebrauchseigenschaften beeinträchtigt werden.

Gegenstand der Erfindung ist eine flammwidrige verstärkte Polyesterformmasse, die

a) einen thermoplastischen Polyester,

b) 3 bis 50 Gew.% eines Verstärkerfüllstoffs,

c) 5 bis 30 Gew.% eines flammhemmenden Zusatzes,

d) 0,2 bis 4,0 Gew.% eines gegebenenfalls organisch modifizierten Schichtsilikats enthält und die dadurch gekennzeichnet ist, dass sie zusätzlich

e) 0,05 bis 2,0 Gew.% eines Alkalimetallsalzes einer aliphatischen Monocarbonsäure mit 6-22 C-Atomen enthält,

wobei sich die Gewichtsprozente auf das Gesamtgewicht der Formmasse beziehen.

Die erfindungsgemässen Formmassen zeichnen sich durch gute Zähigkeitseigenschaften aus, ohne dass dabei die antitropf- und flammhemmenden Eigenschaften beeinträchtigt werden. Zudem sind die Komponenten e) schon bei geringen bis sehr geringen Zusatzmengen wirksam.

Als Komponenten b) bis e) können je einheitliche Verbindungen bzw. Stoffe oder Gemische verschiedener Verbindungen oder Stoffe verwendet werden.

Für die erfindungsgemässen Formmassen geeignete lineare thermoplastische Polyester sind bevorzugt kristallin bzw. teilkristallin und weisen in diesem Fall insbesondere Schmelzpunkte von mindestens 150 °C auf. Sie können jedoch auch in amorpher Form vorliegen, wobei dann der Polyester bevorzugt eine Glasumwandlungstemperatur von mindestens 70 °C, besonders mindestens 100 °C, aufweist. Die Viskositätszahl (nach DIN 53728/3) der Polyester beträgt vorzugsweise mindestens 69 ($cm^3/g$), insbesondere mindestens 98 ($cm^3/g$).

Bei den Polyestern kann es sich um Homo- oder Mischpolyester handeln. Dafür verwendbare Monomere sind z. B. geradkettige oder verzweigte gesättigte aliphatische, cycloaliphatische, aromatische oder heterocyclische Dicarbonsäuren bzw. deren Ester, entsprechende Diole oder entsprechende Hydroxycarbonsäuren. Ferner sind auch Mischungen dieser Polyester geeignet. Ihre Zusammensetzung richtet sich im wesentlichen nach den für einen bestimmten Verwendungszweck gewünschten Eigenschaften.

Die aliphatischen Dicarbonsäuren können 2 bis 40 C-Atome, die cycloaliphatischen Dicarbonsäuren 6 bis 10 C-Atome, die aromatischen Dicarbonsäuren 8 bis 14 C-Atome, die heterocyclischen Dicarbonsäuren 5 bis 12 C-Atome, die aliphatischen Hydroxycarbonsäuren 2 bis 12 C-Atome und die aromatischen sowie cycloaliphatischen Hydroxycarbonsäuren 7 bis 13 C-Atome und die heterocyclischen Hydroxycarbonsäuren 5 bis 11 C-Atome enthalten.

Die aliphatischen Diole können 2 bis 12 C-Atome, die cycloaliphatischen Diole 5 bis 8 C-Atome, die aromatischen Diole 6 bis 16 C-Atome und die heterocyclischen Diole 3-16 C-Atome enthalten.

Als aromatische Diole oder Dicarbonsäuren werden jene bezeichnet, bei denen zwei Hydroxyl- bzw. Carboxylgruppen an einen oder verschiedene aromatische Kohlenwasserstoffreste gebunden sind.

Ferner ist es möglich, dass die Polyester mit geringen Mengen, z. B. 0,1 bis 3 Mol.%, bezogen auf die vorhandenen Dicarbonsäuren, eines mehr als zwei Carboxyl- und/oder Hydroxylgruppen aufweisenden Monomeren (z. B. Pentaerythrit oder Trimellitsäure) vernetzt sind.

Bei Polyestern aus mindestens 3 verschiedenen Monomeren können diese statistisch verteilt sein, oder es kann sich um Blockpolymere handeln.

Als aliphatische Dicarbonsäuren mit 2 bis 40 C-Atomen kommen z. B. Oxalsäure, Malonsäure, Dimethylmalonsäure, Bernsteinsäure, Octadecylbernsteinsäure, Pimelinsäure, Adipinsäure, Trimethyladipinsäure, Sebacinsäure, Azelainsäure und Dimersäure (Dimerisationsprodukte von ungesättigten aliphatischen Carbonsäuren, wie Oelsäure), in Frage.

Als cycloaliphatische Dicarbonsäuren kommen in Frage : 1,3-Cyclobutandicarbonsäure, 1,3-Cyclopentandicarbonsäure, 1,3- und 1,4-Cyclohexandicarbonsäure, 1,3- und 1,4-Methylcyclohexandicarbonsäure, 4,4'-Dicyclohexyldicarbonsäure.

Als geeignete aromatische Dicarbonsäuren kommen in Frage : Terephthalsäure, Isophthalsäure, Phthalsäure, 1,3-, 1,4-, 2,6- oder 2,7-Naphthalindicarbonsäure, 4,4'-Biphenyldicarbonsäure, 4,4'-Diphenylsulfondicarbonsäure, 1,1,3-Trimethyl-5-carboxyl-3-(p-carboxyphenyl)-indan, 4,4'-Diphenyletherdicarbonsäure, 4,4'-Diphenylmethandicarbonsäure. Bevorzugt sind die aromatischen Dicarbonsäuren, unter ihnen besonders Terephthalsäure, Isophthalsäure und Phthalsäure.

Weitere geeignete Dicarbonsäuren sind jene, die —CO—NH-Gruppen enthalten, wie sie z. B. in der DE-OS 2 414 349 beschrieben sind. Auch N-heterocyclische Ringe enthaltende Dicarbonsäuren sind geeignet, z. B. solche, die sich von carboxyalkylierten, carboxyphenylierten oder carboxybenzylierten Monoamino-s-triazindicarbonsäuren (vgl. DE-OS 2 121 184 und 2 533 675), Mono- oder Bishydantoinen, gegebenenfalls halogenierten Benzimidazolonen oder Parabansäure ableiten. Die Carboxyalkylgruppe kann hierbei 3 bis 30 C-Atome enthalten.

Geeignete aliphatische Diole können linerar oder verzweigt sein und weisen bevorzugt 2 bis 12, insbesondere 2 bis 6 Kohlenstoffatome auf, wie z. B. : Ethylenglykol, 1,2- und 1,3-Propylenglykol, 1,2-, 1,3-, 2,3- oder 1,4-Butandiol, Pentylglykol, Neopentylglykol, 1,6-Hexandiol, 1,12-Dodecandiol. Ein geeignetes cycloaliphatisches Diol ist z. B. das 1,4-Dihydroxycyclohexan. Weitere geeignete Diole sind z. B. 1,4-Bis(hydroxymethyl) cyclohexan, aromatisch-aliphatische Diole, wie p-Dihydroxymethylbenzol oder 2,5-Dichlor-p-dihydroxymethylbenzol, sowie Polyoxaalkylenglykole, wie Diethylenglykol, Triethylenglykol oder Polyethylenglykole. Die Alkylendiole sind bevorzugt linear und enthalten insbesondere 2 bis 4 Kohlenstoffatome.

Bevorzugte Diole sind die Alkylendiole, 1,4-Dihydroxycyclohexan und 1,4-Bis(hydroxymethyl) cyclohexan. Insbesondere bevorzugt sind Ethylenglykol und 1,4-Butandiol.

Weitere geeignete Diole sind die β-hydroxyalkylierten, besonders β-hydroxyethylierten Bisphenole, wie 2,2-Bis [4'-β-hydroxyethoxy)-phenyl] propan. Weitere Bisphenole sind später genannt.

Eine weitere Gruppe von geeigneten Diolen sind die in den deutschen Offenlegungsschriften 1 812 003, 2 342 432, 2 342 372 und 2 453 325 beschriebenen heterocyclischen Diole. Beispiele sind : N,N'-Bis(β-hydroxyethyl)-5,5-dimethylhydantoin, N,N'-Bis(β-hydroxypropyl)-5,5-dimethylhydantoin, Methylen-bis [N-(β-hydroxyethyl)-5-methyl-5-ethylhydantoin], Methylen-bis [N-(β-hydroxyethyl)-5,5-dimethylhydantoin], N,N'-Bis(β-hydroxyethyl) benzimidazolon, -(tetrachlor) benzimidazolon oder -(tetrabrom) benzimidazolon.

Als aromatische Diole kommen einkernige Diphenole in Betracht und besonders zweikernige, die an jedem aromatischen Kern eine Hydroxylgruppe tragen. Unter aromatisch werden bevorzugt kohlenwasserstoffaromatische Reste, wie z. B. Phenylen oder Naphthylen verstanden. Neben z. B. Hydrochinon und Resorcin sind besonders die Bisphenole zu nennen, die durch die folgende Formel I dargestellt werden können

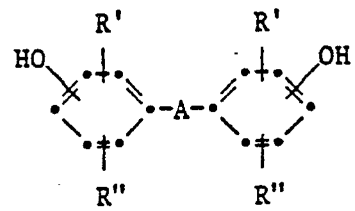

(I)

Die Hydroxylgruppen können sich in m-Stellung, besonders aber in p-Stellung befinden, R' und R'' können in dieser Formel Alkyl mit 1 bis 6 C-Atomen, Halogen, wie Chlor oder Brom, und insbesondere Wasserstoffatome bedeuten. A kann für eine direkte Bindung stehen, oder O, S, $SO_2$, unsubstituiertes oder durch Halogen, Phenyl oder Alkylphenyl, bevorzugt mit 1 oder 2 C-Atomen im Alkyl substituiertes Alkyliden, Cycloalkyliden oder Alkylen bedeuten.

Beispiele für gegebenenfalls substituiertes Alkyliden sind : Ethyliden, 1,1- oder 2,2-Propyliden, 2,2-Butyliden, 1,1-Isobutyliden, Pentyliden, Hexyliden, Heptyliden, Octyliden, Dichlorethyliden, Trichlorethyliden.

Beispiele für gegebenenfalls substituiertes Alkylen sind Methylen, Ethylen, 1,2-Propylen, Phenylmethylen, Diphenylmethylen, Methylphenylmethylen. Beispiele für Cycloalkyliden sind Cyclopentyliden, Cyclohexyliden, Cycloheptyliden und Cyclooctyliden. Bevorzugt sind die Alkyliden-, Cycloalkyliden- oder Alkylengruppen A unsubstituiert.

Beispiele für Bisphenole sind : Bis(p-hydroxyphenyl) ether oder -thioether, Bis(p-hydroxyphenyl) sulfon, Bis(p-hydroxyphenyl) methan, 1,2-Bis(p-hydroxyphenyl) ethan, Phenyl-bis(p-hydroxyphenyl) methan, Diphenyl-bis(p-hydroxyphenyl) methan, 2,2-Bis(4'-hydroxy-3'-methylphenyl) propan, 1,1- oder 2,2-Bis(p-hydroxyphenyl) butan, 1,1-Dichlor- oder 1,1,1-Trichlor-2,2-bis(p-hydroxyphenyl) ethan, 1,1-Bis-(p-hydroxyphenyl) cyclopentan und besonders 2,2-Bis(p-hydroxyphenyl) propan (Bisphenol-A) und 1,1-Bis(p-hydroxyphenyl) cyclohexan (Bisphenol-C).

Geeignete Polyester aus Hydroxycarbonsäuren sind z. B. Polycaprolacton, Polypivalolacton oder die Polyester aus 4-Hydroxycyclohexancarbonsäure oder 4-Hydroxybenzoesäure.

Lineare Polyester die sich von aromatischen Dicarbonsäuren ableiten, haben die grösste Bedeutung erlangt, insbesondere die Polyalkylenterephthalate. Bevorzugt sind daher erfindungsgemässe Formmassen, in denen der Polyester aus mindestens 30 Mol%, bevorzugt mindestens 40 Mol%, aromatischen Dicarbonsäuren und zu mindestens 30 Mol%, vorzugsweise mindestens 40 Mol%, aus Alkylendiolen mit bevorzugt 2 bis 12 C-Atomen aufgebaut ist, bezogen auf den Polyester.

Insbesondere ist in diesem Fall das Alkylendiol linear und enthält 2 bis 6 C-Atome, wie z. B. Ethylen-, Tri-, Tetra- oder Hexamethylenglykol und die aromatische Dicarbonsäure Terephthal- und/oder Isophthalsäure. Besonders bevorzugt sind als Polyester Polyethylen- und Poly-1,4-butylenterephthalat sowie Copolyester auf der Basis von Polyethylen- und Poly-1,4-butylenterephthalat. Ganz besonders bevorzugt ist Poly-1,4-butylenterephthalat (PBTP).

Die definitionsgemässe Formmasse enthält den verstärkenden Füllstoff vorzugsweise in Form von Fasern, z. B. Asbestfasern, Kohlenstoffasern oder insbesondere Glasfasern. Die Füllstoffe können mit einem Haftvermittler beschichtet sein, um deren Bindung an den Polyester zu verbessern. Die Menge des Verstärkerfüllstoffes beträgt vorzugsweise 10 bis 50 Gew.-% besonders bevorzugt 10 bis 40 Gew.-% und ganz besonders bevorzugt 25 bis 35 Gew.-%, bezogen auf die Gesamtmasse.

Die definitionsgemässe Formmasse enthält insbesondere 10 bis 20 Gew.-%, bezogen auf die Gesamtmasse, eines flammhemmenden Zusatzes.

Geeignete flammhemmende Zusätze sind z. B. organische Halogenverbindungen, besonders Chlor- oder Bromverbindungen, die alleine oder zusammen mit synergistisch wirkenden Verbindungen mit Elementen der fünften Hauptgruppe des Periodensystems, besonders von Phosphor- und Antimonverbindungen, insbesondere Antimontrioxid, verwendet werden.

Flammschutzmittel auf der Basis von organischen chlor- und/oder besonders bromhaltigen Verbindungen sind bekannt. Es kann sich hierbei um solche handeln, die dem Kunststoff als Mischkomponente einverleibt sind, oder um solche, die als reaktive Monomere in die Polymermoleküle eingebaut sind. Beispiele für letztere sind Tetrachlorphthalsäureanhydrid, Dichlorterephthalsäure oder deren Niederalkylester, Tetrabromphthalsäureanhydrid, Tetrabrombisphenol-A, N,N'-Bis(β-hydroxyethyl) tetrachlor- oder -tetrabrombenzimidazolon.

Weitere Beispiele für chlor- und/oder bromhaltige Verbindungen sind : Bromierte Polystyrole, z. B. Polytribromstyrol, Polypentabromstyrol, Decabrombiphenyl, Tetrabrombiphenyl, Hexabromdiphenylether, Octabromdiphenylether, Decabromdiphenylether, Tetrabromdiphenylsulfid, Hexabromdiphenylsulfon, 3-(2',4',6'-Tribromphenoxy)-1,2-propandiol, Di- oder Tetrabromphthalsäure bzw. deren Anhydride, Dibromterephthalsäure, hydroxyethyliertes Di- oder Tetrabrombisphenol-A, Tetrabrom-1,4-bis(hydroxymethyl) benzol, Tetrabrombenzimidazolon, N,N'-Ethylen-bis-tetrabromphthalimid sowie die chloranalogen Verbindungen. Weitere organische Halogenverbindungen sind z. B. in der deutschen Offenlegungsschrift 2 242 450 beschrieben.

Das bevorzugte Flammschutzmittel ist eine Kombination von Antimontrioxid mit bromiertem Polystyrol oder mit N,N'-Ethylen-bis-tetrabromphthalimid, und besonders bevorzugt mit Decabromdiphenylether.

Beim erfindungsgemäss verwendeten Schichtsilikat-Antitropfmittel kann es sich um ein Smektit, insbesondere ein Bentonit bzw. Montmorillonit handeln. Es können auch organisch, insbesondere mit organischen Ammoniumsalzen, modifizierte Smektite eingesetzt werden, worin die organischen Reste z. B. Phenyl-, Benzyl- oder Alkylgruppen sein können. Bevorzugt sind Ammoniumsalze die mindestens eine langkettige Alkylgruppe aufweisen, vor allem Tetraalkylammoniumsalze mit einer oder zwei Alkylgruppen mit z. B. 10 bis 25 C-Atomen, insbesondere mit 16 bis 20 C-Atomen. Bevorzugte Produkte dieser Art sind unter den Handelsnamen Claytone® (China-Clay Handelsgesellschaft, Düsseldorf, BRD), bzw. Bentone® (NL Chemicals, Wilmslow, U.K.) bekannt. Vorzugsweise werden Claytone® 34 oder 40 (beide Dimethyl-Dioctadecyl-Ammonium-Bentonit), bzw. Bentone® 27, 34 (Dimethyl-Dioctadecyl-Ammonium-Montmorillonit), 38, 500 oder SD-1 eingesetzt, wobei Bentone® 500 und Bentone® SD-1 besonders bevorzugt werden.

Die Schichtsilikate werden bevorzugt in einer Gesamtmenge von 0,75 bis 2,0 Gew.-% bezogen auf die Gesamtmasse, eingesetzt.

Als Alkalimetallsalze e) enthalten die erfindungsgemässen Formmassen vor allem Natrium- oder Kaliumsalze gesättigter oder ungesättigter aliphatischer Monocarbonsäuren mit 10 bis 20 C-Atomen, vorzugsweise mit 14 bis 18 C-Atomen. Bevorzugte Alkalimetallsalze sind Kalium- und/oder Natriumstearat, Kalium- und/oder Natriumoleat, insbesondere Kaliumoleat. Die Komponente e) liegt vorzugsweise in einer Gesamtmenge von 0,05 bis 1 Gew.-%, insbesondere von 0,1 bis 0,6 Gew.-%, bezogen auf die Gesamtmasse, vor.

Die thermoplastischen Polyester sind bekannt und handelsüblich oder sie können nach bekannten Polykondensationsverfahren der Technik hergestellt werden.

Die Herstellung der erfindungsgemässen Formmassen erfolgt ebenfalls nach in der Technik üblichen Methoden durch Einarbeiten der Zusätze in den thermoplastischen Polyester, z. B. durch Umgranulieren. Das Schichtsilikat sowie das Alkalimetallsalz kann auch auf das Polyestergranulat aufgetrommelt werden.

Es können auch weitere übliche Zusätze zugegeben werden, z. B. weitere Füllstoffe, wie beispielsweise Talk, Glimmer, Metallpulver, Kieselsäureaerosol, Kaolin, Calciumcarbonat, Dolomit, Magnesiumsulfat, Silikate oder Glaskugeln, anorganische oder organische Pigmente, optische Aufheller, Mattierungsmittel, Gleitmittel, Entformungshilfsmittel, kristallisationsfördernde Mittel, Antioxidantien, Lichtschutzmittel und Verarbeitungsstabilisatoren.

Bei den erfindungsgemässen Formmassen wird das Abtropfen der Schmelze beim Beflammen wirksam verhindert. Weiterhin bleiben wegen der Zugabe der Alkalimetallsalze aliphatischer $C_{6-22}$ Monocarbonsäuren die guten Zähigkeitseigenschaften der Formmassen weitgehend erhalten. Die Einarbeitung der Zusätze ist problemlos, und es wird eine gleichmässige Verteilung in der Formmasse erzielt.

Die Formmassen können nach gebräuchlichen Formgebungsverfahren wie Giessen, Pressen, Spritzgiessen und Extrudieren zu Gebrauchsgegenständen aller Art verarbeit werden. Beispiele für solche Gegenstände sind technische Apparateteile, Apparategehäuse, Haushaltgeräte, Sportgeräte, Elektroisolationen, Automobilteile, Schaltungen, Platten, Filme und Halbzeuge, die spanabhebend verformt werden können. Ein besonderes Anwendungsgebiet ist die Herstellung vom Formkörpern bzw. Umhüllungen für die Elektrotechnik und Elektronik.

Die folgenden Beispiele erläutern die Erfindung näher. Die in den Beispielen angegebenen Gew.-%-Mengen der Einzelkomponenten sind immer auf die Gesamtmasse bezogen.

Beispiele 1-9

Die in Tabelle 1 angeführten Komponenten werden mit Hilfe eines Labor-Kokneters bei 250 °C in Polybutylenterephthalat (Viskositätszahl nach DIN 53728/3 102 $cm^3/g$) eingearbeitet und die Formmasse wird granuliert. Nach dem Trocknen der Granulate erfolgt ihre Verarbeitung zu Formkörpern durch Spritzgiessen (125 × 12,5 × 1,6 mm für die Brennbarkeitsprüfung und 6 × 4 × 50 mm für die Schlagzähigkeitsprüfung) nach den folgenden Bedingungen :

Zylindertemperatur 250 °C
Werkzeugtemperatur 80 °C
Zykluszeit 45 sec.

Beispiele 10-12

Die in der Tabelle 1 erstaufgeführten vier Komponenten (PBTP, Glasfasern, Flammschutzmittel und $Sb_2O_3$) werden mit Hilfe eines Labor-Kokneters zur Formmasse verarbeitet, und die Formmasse wird granuliert. Nach dem Trocknen der Granulate werden die letzten zwei Komponenten (Schichtsilikat und Alkalimetallsalz) in einem Taumelmischer aufgetrommelt, und anschliessend, wie oben beschrieben, Spritzgiessformkörper hergestellt.

An den Formkörpern wird die Brennbarkeit gemäss UL 94 sowie die Schlagzähigkeit nach DIN 53453 ermittelt. Bei der Brennbarkeitsprüfung erweisen sich die Formteile als selbstverlöschend V-O und nicht tropfend. Im Schlagversuch erweisen sich die Probekörper als schlagzäh, wobei die Schlagzähigkeit je nach Art und Menge des Schichtsilikats d) und des Alkalimetallsalzes e) variiert.

(Siehe Tabelle 1 Seite 6 ff.)

Tabelle 1

| Beispiel Nr. | Zusammensetzung | Brennbarkeit UL-94 (1,6 mm Probendicke) | Schlagzähigkeit DIN 53453 ($kJ/m^2$) |
|---|---|---|---|
| 1 | 55,0 Gew.-% PBTP[1]<br>30,0 Gew.-% Glasfasern<br>9,0 Gew.-% Decabromdiphenylether<br>4,5 Gew.-% $Sb_2O_3$<br>1,0 Gew.-% Claytone® 34<br>0,5 Gew.-% Kaliumoleat | V-0<br>nicht tropfend | 25,9 |
| 2 | 55,3 Gew.-% PBTP[1]<br>30,0 Gew.-% Glasfasern<br>9,0 Gew.-% Decabromdiphenylether<br>4,5 Gew.-% $Sb_2O_3$<br>1,0 Gew.-% Claytone® 40<br>0,2 Gew.-% Kaliumoleat | V-0<br>nicht tropfend | 25,4 |

Tabelle 1 (Fortsetzung)

| Beispiel Nr. | Zusammensetzung | Brennbarkeit UL-94 (1,6 mm Probendicke) | Schlagzähigkeit DIN 53453 ($kJ/m^2$) |
|---|---|---|---|
| 3 | 55,1 Gew.-% PBTP[1]<br>30,0 Gew.-% Glasfasern<br>9,0 Gew.-% Decabromdiphenylether<br>4,5 Gew.-% $Sb_2O_3$<br>1,0 Gew.-% Claytone® 40<br>0,4 Gew.-% Kaliumoleat | V-0<br>nicht tropfend | 25,8 |
| 4 | 54,7 Gew.-% PBTP[1]<br>30,0 Gew.-% Glasfasern<br>9,0 Gew.-% Decabromdiphenylether<br>4,5 Gew.-% $Sb_2O_3$<br>1,0 Gew.-% Claytone® 40<br>0,8 Gew.-% Kaliumoleat | V-0<br>nicht tropfend | 20,3 |

Tabelle 1 (Fortsetzung)

| Beispiel Nr. | Zusammensetzung | Brennbarkeit UL-94 (1,6 mm Probendicke) | Schlagzähigkeit DIN 53453 (kJ/m²) |
|---|---|---|---|
| 5 | 55,0 Gew.-% PBTP[1]<br>30,0 Gew.-% Glasfasern<br>9,0 Gew.-% Decabromdiphenylether<br>4,5 Gew.-% $Sb_2O_3$<br>1,0 Gew.-% Claytone® 40<br>0,5 Gew.-% Natriumoleat | V-O<br>nicht tropfend | 20,9 |
| 6 | 53,5 Gew.-% PBTP[1]<br>30,0 Gew.-% Glasfasern<br>9,0 Gew.-% Decabromdiphenylether<br>4,5 Gew.-% $Sb_2O_3$<br>2,0 Gew.-% Claytone® 40<br>1,0 Gew.-% Kaliumoleat | V-O<br>nicht tropfend | 16,5 |

Tabelle 1 (Fortsetzung)

| Beispiel Nr. | Zusammensetzung | Brennbarkeit UL-94 (1,6 mm Probendicke) | Schlagzähigkeit DIN 53453 ($kJ/m^2$) |
|---|---|---|---|
| 7 | 55,0 Gew.-% PBTP[1]<br>30,0 Gew.-% Glasfasern<br>9,0 Gew.-% Decabromdiphenylether<br>4,5 Gew.-% $Sb_2O_3$<br>1,0 Gew.-% Bentone® 27<br>0,5 Gew.-% Kaliumoleat | V-O<br>nicht tropfend | 22,5 |
| 8 | 55,2 Gew.-% PBTP[1]<br>30,0 Gew.-% Glasfasern<br>9,0 Gew.-% Decabromdiphenylether<br>4,5 Gew.-% $Sb_2O_3$<br>1,0 Gew.-% Bentone® SD-1<br>0,3 Gew.-% Kaliumoleat | V-O<br>nicht tropfend | 32,2 |

Tabelle 1 (Fortsetzung)

| Beispiel Nr. | Zusammensetzung | Brennbarkeit UL-94 (1,6 mm Probendicke) | Schlagzähigkeit DIN 53453 ($kJ/m^2$) |
|---|---|---|---|
| 9 | 55,2 Gew.-% PBTP[1]<br>30,0 Gew.-% Glasfasern<br>9,0 Gew.-% Decabromdiphenylether<br>4,5 Gew.-% $Sb_2O_3$<br>1,0 Gew.-% Bentone® 500<br>0,3 Gew.-% Kaliumoleat | V-O<br>nicht tropfend | 29,9 |
| 10 | 62,5 Gew.-% PBTP[1]<br>20,0 Gew.-% Glasfasern<br>12,5 Gew.-% Polytribromstyrol<br>5,0 Gew.-% $Sb_2O_3$<br>1,0 Gew.-% Glaytone® 34<br>0,3 Gew.-% Kaliumoleat | V-O<br>nicht tropfend | 25,4, |

Tabelle 1 (Fortsetzung)

| Beispiel Nr. | Zusammensetzung | Brennbarkeit UL-94 (1,6 mm Probendicke) | Schlagzähigkeit DIN 53453 ($kJ/m^2$) |
|---|---|---|---|
| 11 | 56,5 Gew.-% PBTP[1]<br>30,0 Gew.-% Glasfasern<br>9,0 Gew.-% Decabromdiphenylether<br>4,5 Gew.-% $Sb_2O_3$<br>1,0 Gew.-% Montmorillonit K 10 (Fluka)<br>0,3 Gew.-% Kaliumoleat | V-O<br>nicht tropfend | 23,1 |
| 12 | 56,5 Gew.-% PBTP[1]<br>30,0 Gew.-% Glasfasern<br>9,0 Gew.-% Decabromdiphenylether<br>4,5 Gew.-% $Sb_2O_3$<br>1,0 Gew.-% Bentone® 34<br>0,5 Gew.-% Natriumstearat | V-O<br>nicht tropfend | 21,6 |

[1] PBTP : Poly-1,4-butylenterephthalat

[2] Claytone® und Betone® sind geschützte Markennamen der Firmen « China-Clay Handelsgesellschaft » bzw. « NL Chemicals ».

Claytone® 40 und Claytone® 34 : Dimethyl-Dioctadecyl-Ammonium-Bentonit
Bentone® 34 : Dimethyl-Dioctadecyl-Ammonium-Montmorillonit
Bentone® SD-1 : Organisch modifizierter Smektit
Bentone® 27 und Bentone® 500 : Organisch modifizierter Montmorillonit

**Patentansprüche**

1. Flammwidrige verstärkte Polyesterformmasse, die
a) einen thermoplastischen Polyester,
b) 3 bis 50 Gew.-% eines Verstärkerfüllstoffs,
c) 5 bis 30 Gew.-% eines flammhemmenden Zusatzes,
d) 0,2 bis 4,0 Gew.-% eines gegebenenfalls organisch modifizierten Schichtsilikats enthält und die dadurch gekennzeichnet ist, dass sie zusätzlich
e) 0,05 bis 2,0 Gew.-% eines Alkalimetallsalzes einer aliphatischen Monocarbonsäure mit 6 bis 22 C-Atomen enthält,
wobei sich die Gewichtsprozente auf das Gesamtgewicht der Formmasse beziehen.

2. Formmasse gemäss Anspruch 1, dadurch gekennzeichnet, dass der Polyester linear und von aromatischen Dicarbonsäuren abgeleitet ist, und insbesondere ein Polyalkylenterephthalat ist.

3. Formmasse gemäss Anspruch 1, dadurch gekennzeichnet, dass der Polyester ein Polyethylen- oder Poly-1,4-butylenterephthalat oder ein Copolyester auf der Basis von Polyethylen- und von Poly-1,4-butylenterephthalat ist.

4. Formmasse gemäss Anspruch 1, dadurch gekennzeichnet, dass der Polyester Poly-1,4-butylenterephthalat ist.

5. Formmasse gemäss Anspruch 1, dadurch gekennzeichnet, dass sie als Verstärkerfüllstoff Glasfasern enthält.

6. Formmasse gemäss Anspruch 1, dadurch gekennzeichnet, dass sie als flammhemmenden Zusatz eine organische Chlor- oder Bromverbindung alleine oder in Kombination mit Antimontrioxid enthält.

7. Formmasse gemäss Anspruch 1, dadurch gekennzeichnet, dass sie als flammhemmenden Zusatz eine Kombination von Antimontrioxid mit bromiertem Polystyrol oder mit N,N'-Ethylen-bis-tetrabromphthalimid, und vorzugsweise mit Decabromdiphenylether enthält.

8. Formmasse gemäss Anspruch 1, dadurch gekennzeichnet, dass sie als Komponente d) ein Smektit, vorzugsweise ein Bentonit bzw. Montmorillonit enthält.

9. Formmasse gemäss Anspruch 8, dadurch gekennzeichnet, dass das Smektit organisch, vorzugsweise mit organischen Ammoniumsalzen, modifiziert ist.

10. Formmasse gemäss Anspruch 1, dadurch gekennzeichnet, dass sie als Komponente d) Dimethyl-Dioctadecyl-Ammonium-Bentonit bzw. -Montmorillonit enthält.

11. Formmasse gemäss Anspruch 1, dadurch gekennzeichnet, dass sie als Komponente e) Kalium- und/oder Natriumstearat, Kalium- und/oder Natriumoleat, vorzugsweise Kaliumoleat enthält.

12. Formmasse gemäss Anspruch 1, worin die Anteile an Komponenten b) bis e) unabhängig voneinander betragen : Verstärkerfüllstoff b) 10 bis 50 Gew.-%, besonders 10 bis 40 Gew.-%, flammhemmender Zusatz c) 10 bis 20 Gew.% ; Schichtsilikat d) 0,75 bis 2,0 Gew.-% und Komponente e) 0,05 bis 1,0 Gew.-%, besonders 0,1 bis 0,6 Gew.-%, jeweils bezogen auf das Gesamtgewicht der Formmassen.

13. Verfahren zur Herstellung von geformten Gegenständen, dadurch gekennzeichnet, dass man eine Formmasse gemäss Anspruch 1 verformt.

14. Formkörper hergestellt aus der Formmasse gemäss Anspruch 1.

**Claims**

1. A flame-retarding, reinforced polyester moulding material which contains
a) a thermoplastic polyester,
b) 3 to 50 % by weight of a reinforcing filler,
c) 5 to 30 % by weight of a flame-retarding additive and
d) 0.2 to 4.0 % by weight of an optionally organic-modified phyllosilicate, and which additionally contains
e) 0.05 to 2.0 % by weight of an alkali metal salt of an aliphatic monocarboxylic acid having 6 to 22 C atoms,
the percentages by weight being based on the total weight of the moulding material.

2. A moulding material according to claim 1, wherein the polyester is linear and is derived from aromatic dicarboxylic acids, and is, in particular, a polyalkylene terephthalate.

3. A moulding material according to claim 1, wherein the polyester is a polyethylene terephthalate or poly-1,4-butylene terephthalate or a copolyester based on polyethylene terephthalate and poly-1,4-butylene terephthalate.

4. A moulding material according to claim 1, wherein the polyester is poly-1,4-butylene terephthalate.

5. A moulding material according to claim 1, which contains glass fibres as the reinforcing filler.

6. A moulding material according to claim 1, which contains, as the flame-retarding additive, an organic chlorine or bromine compound on its own or in combination with antimony trioxide.

7. A moulding compound according to claim 1, which contains, as the flame-retarding additive, a combination of antimony trioxide with brominated polystyrene or N,N'-ethylene-bis-tetrabromophthalimide and preferably decabromodiphenyl ether.

8. A moulding material according to claim 1, which contains, as the component d), a smectite, preferably a bentonite or montmorillonite.

9. A moulding material according to claim 8, wherein the smectite is modified with organic compounds preferably with organic ammonium salts.

10. A moulding material according to claim 1, which contains, as the component d), dimethyldioctadecylammonium bentonite or dimethyldioctadecylammonium montmorillonite.

11. A moulding material according to claim 1, which contains, as the component e), potassium and/or sodium stearate, potassium and/or sodium oleate, preferably potassium oleate.

12. A moulding material according to claim 1, wherein the proportions of components b) to e) independently of one another are : reinforcing filler b) 10 to 50 % by weight, particularly 10 to 40 % by weight ; flame-retarding additive c) 10 to 20 % by weight ; phyllosilicate d) 0.75 to 2.0 % by weight ; and component e) 0.05 to 1.0 % by weight, particularly 0.1 to 0.6 % by weight, in each case based on the total weight of the moulding materials.

13. A process for the production of shaped articles, wherein a moulding material according to claim 1 is shaped.

14. A shaped article produced from the moulding material according to claim 1.

**Revendications**

1. Matière à mouler à base de polyester, renforcée et ignifugée, qui contient :

a) un polyester thermoplastique,

b) de 3 à 50 % en poids d'une charge renforçante,

c) de 5 à 30 % en poids d'un additif ignifugeant,

d) de 0,2 à 4,0 % en poids d'un phyllosilicate éventuellement modifié par des radicaux organiques, et qui est caractérisée en ce qu'elle contient en outre :

e) de 0,05 à 2,0 % en poids d'un sel de métal alcalin d'un acide monocarboxylique aliphatique contenant de 6 à 22 atomes de carbone,

les pourcentages pondéraux indiqués ci-dessus étant rapportés au poids total de la matière à mouler.

2. Matière à mouler selon la revendication 1, caractérisée en ce que le polyester est linéaire et dérive d'acides dicarboxyliques aromatiques, en particulier en ce qu'il est un poly-(téréphtalate d'alkylène).

3. Matière à mouler selon la revendication 1, caractérisée en ce que le polyester est un poly-(téréphtalate d'éthylène), un poly-(téréphtalate de butylène-1,4) ou un copolyester à base de poly-(téréphtalate d'éthylène) et de poly-(téréphtalate de butylène-1,4).

4. Matière à mouler selon la revendication 1, caractérisée en ce que le polyester est le poly-(téréphtalate de butylène-1,4).

5. Matière à mouler selon la revendication 1, caractérisée en ce qu'elle contient des fibres de verre comme charge renforçante.

6. Matière à mouler selon la revendication 1, caractérisée en ce qu'elle contient, comme additif ignifugeant, un composé organique chloré ou bromé, seul ou en association avec du trioxyde d'antimoine.

7. Matière à mouler selon la revendication 1, caractérisée en ce qu'elle contient, comme additif ignifugeant, une association de trioxyde d'antimoine avec un polystyrène bromé ou avec le N,N'-éthylène-bis-(tétrabromophtalimide), de préférence avec l'oxyde de bis-(pentabromo-phényle).

8. Matière à mouler selon la revendication 1, caractérisée en ce qu'elle contient, comme composante (d), une smectite, de préférence une bentonite ou une montmorillonite.

9. Matière à mouler selon la revendication 8, caractérisée en ce que la smectite est modifiée par des composés organiques, de préférence par des sels d'ammoniums organiques.

10. Matière à mouler selon la revendication 1, caractérisée en ce qu'elle contient, comme composante (d), de la diméthyl-dioctadécyl-ammonium-bentonite ou -montmorillonite.

11. Matière à mouler selon la revendication 1, caractérisée en ce qu'elle contient, comme composante (e), du stéarate de potassium et/ou de sodium, de l'oléate de potassium et/ou de sodium, de préférence de l'oléate de potassium.

12. Matière à mouler selon la revendication 1, caractérisée en ce que les proportions des composantes (b) à (e) sont, indépendamment les unes des autres : — pour la charge renforçante (b) : de 10 à 50 % en poids, plus particulièrement de 10 à 40 % en poids, — pour l'additif ignifugeant (c) : de 10 à 20 % en poids, — pour le phyllosilicate (d) : de 0,75 à 2,0 % en poids et — pour la composante (e) : de 0,05 à 1,0 % en poids, plus particulièrement de 0,1 à 0,6 % en poids, à chaque fois par rapport au poids total de la matière à mouler.

13. Procédé de fabrication d'objets moulés caractérisé en ce qu'on moule une matière à mouler selon la revendication 1.

14. Objets moulés qui ont été fabriqués à partir de la matière à mouler selon la revendication 1.